# EUROPEAN PATENT APPLICATION

(11) **EP 2 329 711 A1**
(43) Date of publication of application: **08.06.2011**
(21) Application number: 09177924.9
(22) Date of filing: 03.12.2009
(51) Int. Cl.: A01N 25/00, A01N 47/24, A01P 3/00

(54) **Novel seed treatment method by using supercritical carbon dioxide**

(71) Applicant: BASF SE, 67056 Ludwigshafen (DE)
(72) Inventor: The designation of the inventor has not yet been filed
(74) Representative: Reitstötter - Kinzebach

(57) **Abstract**

The present invention relates to a method for impregnating seed with at least one agriculturally active compound wherein the seed is brought into contact with a solution of the agriculturally active compound in supercritical CO₂ characterized in that the CO₂ is transferred to its subcritical state by a pressure reduction where the pressure reduction rate is in the range from 4 to 20 bar/min.

## Description

The present invention relates to a method of impregnating seed with at least one agriculturally active compound.

In the last years, the use of compressed gases as solvent has developed markedly in industry. During the 80s compressed gases were mostly used for extracting natural substances, e.g. decaffeination of coffee beans. Nowadays compressed gases are used for impregnating different carrier matrices inter alia. A matter of particular interest is the treatment of seed with agriculturally active compounds. Because of its inert properties, its toxicological safety, availability and physical and physicochemical properties, carbon dioxide plays the most important role concerning supercritical solvents.

A motivation for using gases in the supercritical state is frequently their markedly lower viscosity compared to classical solvent and the fact that the density in the supercritical state can be continuously controlled within a wide range by varying the process pressure. Since the density of the supercritical gas, in a simplified consideration, correlates with its dissolving power, it gives the ideal prerequirements for carrying out selective extractions or separations. In prior art, many processing examples are disclosed in which selectivity of extraction is remarkably good in particular for natural substances. This justifies the use of supercritical gases from economic aspects. But the pressure adjustable selectivity of supercritical gases can be used not only for selective extraction but also for impregnation different materials. Here, again, the very high diffusivity of supercritical gases, given by their low viscosity, allows them to penetrate into poorly accessible targets. This ability can be used not only to extract substances out of such target but also be used for impregnating them.

DE 4202320 describes a method for impregnating a substrate wherein an impregnating agent is dissolved in a supercritical fluid and brought into contact for a given time with the substrate while the supercritical fluid is transferred in its subcritical state. DE 4202320 inter alia suggests seed as a substrate for impregnation, CO₂ as supercritical fluid and pharmaceutical agent as impregnating agent. The method of the DE 4202320 requires a tedious stepwise pressure reduction with long step in order to avoid destruction of the impregnated material

WO 02/20177 describes a method for impregnating carrier matrices with solid and/or liquid compounds by means of compressed gases applying least two asymmetrical pressure-change cycles. WO 02/20177 suggests seed as a carrier matrix, CO₂ as supercritical gas and agriculturally active compounds as impregnating agent. The process disclosed therein involves rapid pressure changes and pressure reduction rate is about 1600 bar/min.

It has been found that rapid pressure changes, in particular a rapid pressure reduction to the subcritical state is detrimental to the seeds in terms of their germination.

Thus it is an object of the present invention to develop a method for impregnating seeds with at least one agriculturally active component dissolved in supercritical CO₂ which does not have an adverse effect on the germination of the seed and which is in particular applicable for sensitive seed such as seeds of vegetables, ornamentals and fruits.

This object was achieved according to the invention by the means of the method as described herein and in the claims.

Thus, the present invention relates to a method for impregnating seed with at least one agriculturally active compound wherein the seed is brought into contact with a solution of the agriculturally active compound in supercritical CO₂ characterized in that the CO₂ is transferred to its subcritical state by a pressure reduction where the pressure reduction rate is in the range from 4 to 20 bar/min.

Surprisingly, by means of the method according to the invention the germination rate of impregnated seed is over 90%, preferably over 95% and in particular over 99% of the germination rate of untreated seeds. Furthermore, the method allows impregnating seeds rapidly in a time period from 1 min to 3 h.

It is believed that rapid changes in pressure in particular are exerting stress on the seed. Rapid pressure change might e.g. lead inter alia to damages in the structure of the seed and on cellular level to a destruction of the cell wall, resulting in death of cells and a reduced germination rate or in total annihilation of germination. It was found that depressurization with a rate over 20 bar/min will lead to the described adverse effect on germination.

In order to achieve the most effective mass transport of the agriculturally active agent into the seed, the density difference during pressure change should be as large as possible and the pressure reduction step should occur as fast as possible. Therefore, the pressure reduction rate for the transfer of the supercritical CO₂ into its subcritical state is performed at a rate ranging from 4 to 20 bar/min, preferably from 6 to 15 bar/min, in particular from 7 to 10 bar/min.

In the method according to the present invention the seed is treated with a solution of the agriculturally active compound in supercritical CO₂. Therefore, the seed is exposed to a pressure increase from normal pressure to the pressure maximum. Subsequently, the seed is brought into contact with a solution of a agriculturally active compound in supercritical CO₂. The CO₂ is transferred into its subcritical state by a pressure reduction.

The method according to the present invention exploits the differing solubility of agriculturally active compounds at different densities of supercritical CO₂, in order to transport the agriculturally active compound actively from the exterior into the interior of the seed.

Regarding the process pressure the most expedient practical lower limit of the density minimum occurs when the CO₂ has no longer any dissolving power for the agriculturally active compound. With respect to density, there is, for the method, in principle, no upper limit in the pressure maximum, but high pressure and especially the pressure changes necessary to create this pressure may be harmful for the seed and their germination rate. Hence, the pressure maximum according to the invention will generally be chosen to range from 80 to 300 bar, preferably from 100 to 200, in particular from 110 to 140. During the process the pressure is constant with fluctuation below 20 bar/min.

Pressure will be applied in a way that pressure maximum is typically reached in a time period ranging from 5 s to 60 min, preferably from 1 min to 40 min, in particular from 5 min to 30 min. Pressure reduction to the subcritical state will usually occur in a time period in the range from 1 to 60 min, preferably from 5 to 40 min, in particular 10 to 30 min.

In one embodiment the pressure change occurs asymmetrically, which means that the time period for increasing the pressure the pressure maximum differs from the time period depressurizing back to normal pressure. In a particular embodiment the time period to achieve the respective pressure maximum is greater than the time period for the pressure reduction to normal pressure.

Usually the seed will be brought into contact with the solution of the agriculturally active compound in supercritical CO₂ in a contact time period from 1 to 120 min, preferably from 5 to 60 min and in particular from 10 to 30 min.

During contact, preferably from beginning to the end of the method, the temperature will be usually kept during the method in the range from 30 to 70 °C, in particular from 32 to 50 °C.

According to one embodiment of the invention, the method is performed in a discontinuous manner using an autoclave. In this embodiment the autoclave is charged with the seed and the agriculturally active compound. Subsequently, CO₂-pressure is increase from normal pressure to the pressure maximum at a constant temperature. The formed supercritical CO₂ is dissolving the agriculturally active compound. Thereby, the seed is brought into contact with the solution of the agriculturally active compound in supercritical CO₂. After a contact time as describe above, the autoclave is depressurized. The pressure reduction rate is in the defined above range. It is also possible that the agriculturally active agent is dissolved in the supercritical CO₂ before it is given to the seed. Optionally, the seed can be stirred. Liquids aids can be added in order to enhance the solubility of the agriculturally active compound.

One further embodiment provides a continuous method similar to the decaffeination of coffee beans. A solution of the agriculturally active compound in supercritical CO₂ is brought into contact with the seed in a pressure chamber over a specific time. Subsequently, the supercritical CO₂ is depressurized. The generated subcritical CO₂ is repressurized, used again to dissolve the agriculturally active compound and is brought into contact with the seed. After a contact time as described above the pressure is reduced to the subcritical state of CO₂ with a pressure reduction rate as described above. Optionally, the seed can be stirred. Liquids aids can be added in order to enhance the solubility of the agriculturally active compound.

The solution of the agriculturally active compound can be generated in different ways. In one embodiment the agriculturally active compound is dissolved in supercritical CO₂ before it is brought into contact with the seed. In another embodiment the agriculturally active compound is brought into contact with the seed e.g. by mixing with the seed and then the supercritical CO₂ is added and thereby dissolves the agriculturally active compound. It is possible that the agriculturally active compound is present in the solid or liquid state or already formulated as a liquid or solid formulation, an emulsifiable concentrate, a suspension concentrate or a liquid diluted concentrate before it is mixed with the supercritical CO₂.

In principle an amount of the agriculturally active compound is in the range from 0,01 to 1000 g/kg seed, preferably from 0,1 to 500 g/kg seed, more preferably from 1 to 100 g/kg seed and in particular from 5 g to 50 g/kg seed.

Principally any agriculturally active compound which is suitable for seed impregnation can be used. Suitable agriculturally active compounds are principally organic compounds, preferably organic compounds having a molecular weight from 100 to 400 Dalton. The agriculturally active compound may be liquid or solid at 298 K. Preferably the agriculturally active compound is solid at 298 K and in particular has a melting point of at least 40 °C e.g. from 40 to 250 °C. The agriculturally active compound may be acid, basic or it may be a neutral compound. If it is an acid or base it may also be used in the form of its salt.

The agriculturally active compounds are generally selected from the group of pesticide compounds such as fungicide compounds, insecticide compounds and herbicide compounds and plant growth regulators and mixtures of these compounds.

In a particular embodiment of the invention the agriculturally active compound includes at least one insecticide compound. In this embodiment the agriculturally active compound is preferably selected from insecticide compounds, a mixture of insecticide compounds and mixtures of at least one insecticide compound with at least one fungicide compound.

As insecticide compound principally any insecticide can be used. Preferably, it can be selected out of the group of
- organo(thio)phosphates, such as acephate, azamethiphos, azinphos-ethyl, azinphos-methyl, chlorethoxyfos, chlorfenvinphos, chlormephos, chlorpyrifos, chlorpyrifos-methyl, coumaphos, cyanophos, demeton-S-methyl, diazinon, dichlorvos/ DDVP, dicrotophos, dimethoate, dimethylvinphos, disulfoton, EPN, ethion, ethoprophos, famphur, fenamiphos, fenitrothion, fenthion, flupyrazophos, fosthiazate, heptenophos, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
- carbamate compounds, such as compounds: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb or triazamate;
- pyrethroids such as acrinathrin, allethrin, d-cis-trans allethrin, d-trans allethrin, bifenthrin, bioallethrin, bioallethrin S-cylclopentenyl, bioresmethrin, cycloprothrin, cyfluthrin, beta-cyfluthrin, cyhalothrin, lambda-cyhalothrin, gammacyhalothrin, cypermethrin, alpha-cypermethrin, beta-cypermethrin, thetacypermethrin, zeta-cypermethrin, cyphenothrin, deltamethrin, empenthrin, esfenvalerate, etofenprox, fenpropathrin, fenvalerate, flucythrinate, flumethrin, taufluvalinate, halfenprox, imiprothrin, metofluthrin, permethrin, phenothrin, prallethrin, profluthrin, pyrethrin (pyrethrum), resmethrin, silafluofen, tefluthrin, tetramethrin, tralomethrin or transfluthrin;
- juvenile hormone mimics such as hydroprene, kinoprene, methoprene, fenoxycarb or pyriproxyfen;
- GABA gated chloride channel antagonists such as chlordane, endosulfan, gamma-HCH (lindane); ethiprole, fipronil, pyrafluprole or pyriprole;
- chloride channel activators such as abamectin, emamectin benzoate, milbemectin or lepimectin;
- METI I, II and III compounds such as fenazaquin, fenpyroximate, pyrimidifen, pyridaben, tebufenpyrad, tolfenpyrad, flufenerim, rotenone, acequinocyl, flua-cyprim or hydramethylnon;
- uncouplers of oxidative phosphorylation such as chlorfenapyr or DNOC;
- inhibitors of oxidative phosphorylation such as azocyclotin, cyhexatin, diafenthiuron, fenbutatin oxide, propargite or tetradifon;
- moulting disruptors such as cyromazine, chromafenozide, halofenozide, methoxyfenozide or tebufenozide;
- synergists such as piperonyl butoxide or tribufos;
- sodium channel blockers such as indoxacarb or metaflumizone;
- selective feeding blockers such as crylotie, pymetrozine or fionicamid;
- mite growth inhibitors such as clofentezine, hexythiazox or etoxazole;
- chitin synthesis inhibitors such as buprofezin, bistrifluron, chlorfluazuron, diflubenzuron, flucycloxuron, flufenoxuron, hexaflumuron, lufenuron, novaluron, noviflumuron, teflubenzuron or triflumuron;
- lipid biosynthesis inhibitors such as spirodiclofen, spiromesifen or spirotetramat;
- octapaminergic agonists such as amitraz;
- ryanodine receptor modulators such as flubendiamide and the phtalamid compound (R)-, (S)- 3- Chlor-N1-{2-methyl-4-[1,2,2,2 -tetrafluor-1-(trifluormethyl)ethyl]phenyl}-N2-(1-methyl-2-methylsulfonylethyl)phthalamid;
- anthranilamides, chloranthraniliprole, cyantraniliprole, 5-Bromo-2-(3-chloro-pyridin-2-yl)-2H-pyrazole-3-carboxylic acid [4-cyano-2-(1-cyclopropyl-ethylcarbamoyl)-6-methyl-phenyl]-amide, 5-Bromo-2-(3-chloro-pyridin-2-yl)-2H-pyrazole-3-carboxylic acid [2-chloro-4-cyano-6-(1-cyclopropyl-ethylcarbamoyl)-phenyl]-amide, 5-Bromo-2-(3-chloro-pyridin-2-yl)-2H-pyrazole-3-carboxylic acid [2-bromo-4-cyano-6-(1-cyclopropyl-ethylcarbamoyl)-phenyl]-amide, 5-Bromo-2-(3-chloro-pyridin-2-yl)-2H-pyrazole-3-carboxylic acid [2-bromo-4-chloro-6-(1-cyclopropyl-ethylcarbamoyl)-phenyl]-amide, 5-Bromo-2-(3-chloro-pyridin-2-yl)-2H-pyrazole-3-carboxylic acid [2,4-dichloro-6-(1-cyclopropyl-ethylcarbamoyl)-phenyl]-amide, 5-Bromo-2-(3-chloro-pyridin-2-yl)-2H-pyrazole-3-carboxylic acid [4-chloro-2-(1-cyclopropyl-ethylcarbamoyl)-6-methyl-phenyl]-amide, N'-(2-{[5-Bromo-2-(3-chloro-pyridin-2-yl)-2H-pyrazole-3-carbonyl]-amino}-5-chloro-3-methyl-benzoyl)-hydrazinecarboxylic acid methyl ester, N'-(2-{[5-Bromo-2-(3-chioro-pyridin-2-yl)-2H-pyrazole-3-carbonyl]-amino}-5-chloro-3-methyl-benzoyl)-N'-methyl-hydrazinecarboxylic acid methyl ester, N'-(2-{[5-Bromo-2-(3-chioro-pyridin-2-yl)-2H-pyrazoie-3-carbonyl]-amino}-5-chloro-3-methyl-benzoyl)-N,N'-dimethyl-hydrazinecarboxylic acid methyl ester, N'-(3,5-Dibromo-2-{[5-bromo-2-(3-chloro-pyridin-2-yl)-2-H-pyrazole-3-carbonyl]-amino}-benzoyl)-hydrazinecarboxylic acid methyl ester, N'-(3,5-Dlbromo-2-{[5-bromo-2-(3-chloro-pyridin-2-yl)-2H-pyrazole-3-carbonyl]-amino}-benzoyl)-N'-methyl-hydrazinecarboxylic acid methyl ester and N'-(3,5-Dibromo-2-{[5-bromo-2-(3-chloro-pyridin-2-yl)-2H-pyrazole-3-carbonyl]-amino}-benzoyl)-N,N'-dimethyl-hydrazinecarboxylic acid methyl ester (M23.12);
- malononitriles such as 2-(2,2,3,3,4,4,5,5-octafluoropentyl)-2-(3,3,3-trifluoropropyl)malononitrile (CF₂H-CF₂-CF₂-CF₂-CH₂-C(CN)₂-CH₂-CH₂-CF₃) and 2-(2,2,3,3,4,4,5,5-octafluoropentyl)-2-(3,3,4,4,4-pentafluorobutyl)-malonodinitrile (CF₂H-CF₂-CF₂-CF₂-CH₂-C(CN)₂-CH₂-CH₂-CF₂-CFs);
- Aminofuranone compounds such as 4-{[(6-Bromopyrid-3-yl)methyl](2-fluoroethyl)amlno}furan-2(5H)-on, 4-{[(6-Fluoropyrid-3-yl)methyl](2,2-difluoroethyl)amino}furan-2(5H)-on, 4-{[(2-Chioro1,3-thlazolo-5-yl)methyl](2-fluoroethyl)amlno}furan-2(5H)-on, 4-{[(6-Chloropyrid-3-yl)methyl](2-fluoroethyl)amino}furan-2(5H)-on, 4-{[(6-Chloropyrid-3-yl)methyl](2,2-difluoroethyl)amino}furan-2(5H)-on, 4-{[(6-Chloro-5-fluoropyrid-3-yl)methyl](methyl)amino}furan-2(5H)-on, 4-{[(5,6-Dichloropyrid-3-yl)methyl](2-fluoroethyl)amino}furan-2(5H)-on, 4-{[(6-Chloro-5-fluoropyrid-3-yl)methyl](cyclopropyl)amlno}furan-2(5H)-on, 4-{[(6-Chloropyrid-3-yl)methyl](cyclopropyl)amlno}furan-2(5H)-on and 4-{[(6-Chloropyrid-3-yl)methyl](methyl)amino}furan-2(5H)-on;
- nicotinic receptor modulators such as acetamiprid, bensultap, cartap hydrochloride, clothianidin, dinotefuran, imidacloprid, thiamethoxam, nitenpyram, nicotine, spinosad (allosteric agonist), spinetoram (allosteric agonist), thiacloprid, thiocyclam, thiosultap-sodium and AKD1022; and
- compounds, selected from the group consisting of aluminium phosphide, amidoflumet, benclothiaz, benzoximate, bifenazate, borax, bromopropylate, cyanide, cyenopyrafen, cyflumetofen, chinomethionate, dicofol, fluoroacetate, phosphine, pyridalyl, pyrifluquinazon, sulfur, organic sulfur compounds, tartar emetic, sulfoxaflor, N-R'-2,2-dihalo-1-R"cyclo-propanecarboxamide-2-(2,6-dichloro-α,α,α-trifluoro-p-tolyl)hydrazone or N-R'-2,2-di(R"')propionamide-2-(2,6-dichloro-α,α,α-trifluoro-p-tolyl)-hydrazone, wherein R' is methyl or ethyl, halo is chloro or bromo, R" is hydrogen or methyl and R"' is methyl or ethyl, 4-But-2-ynyloxy-6-(3,5-dimethyl-piperidin-1-yl)-2-fluoro-pyrimidine, cyclopropaneacetic acid 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11 H-naphtho[2,1-b]pyrano[3,4-e]pyran-3,6-diyl] ester and 8-(2-Cyclopropylmethoxy-4-trifluoromethyl-phenoxy)-3-(6-trifluoromethyl-pyridazin-3-yl)-3-aza-bicyclo[3.2.1]octane(M27.3).

In a particular preferred embodiment the insecticide is selected from the group of nicotinic receptor modulators.

In another particular embodiment of the invention the agriculturally active compound includes at least one fungicide compound. In this embodiment the agriculturally active compound is preferably selected from fungicide compounds, a mixture of fungicide compounds and mixtures of at least one fungicide compound with at least one insecticide compound.

As fungicide compound principally any fungicide can be used. Preferably, it can be selected from the group consisting of
- acylalanines such as benalaxyl, metalaxyl, ofurace, oxadixyl,
- amine derivatives such as aldimorph, dodine, dodemorph, fenpropimorph, fenpropidin, guazatine, iminoctadine, spiroxamin, tridemorph,
- anilinopyrimidines such as pyrimethanil, mepanipyrim or cyrodinyl,
- antibiotics such as cycloheximid, griseofulvin, kasugamycin, natamycin, polyoxin or streptomycin,
- azoles such as bitertanol, bromoconazole, cyproconazole, difenoconazole, dinicona-zole, epoxiconazole, fenbuconazole, fluquiconazole, flusilazole, hexaconazole, imazalil, metconazole, myclobutanil, penconazole, propiconazole, prochloraz, prothioconazole, tebuconazole, triadimefon, triadimenol, triflumizol, triticonazole, flutriafol,
- dicarboximides such as iprodion, myclozolin, procymidon, vinclozolin,
- dithiocarbamates such as ferbam, nabam, maneb, mancozeb, metam, metiram, propineb, polycarbamate, thiram, ziram, zineb,
- heterocyclic compounds such as anilazine, benomyl, boscalid, carbendazim, carboxin, oxycarboxin, cyazofamid, dazomet, dithianon, famoxadon, fenamidon, fenarimol, fuberidazole, flutolanil, furametpyr, isoprothiolane, mepronil, nuarimol, probenazole, proquinazid, pyrifenox, pyroquilon, quinoxyfen, silthiofam, thiabendazole, thifluzamid, thiophanate-methyl, tiadinil, tricyclazole, triforine,
- copper fungicides such as Bordeaux mixture, copper acetate, copper oxychloride, ba-sic copper sulfate,
- nitrophenyl derivatives such as binapacryl, dinocap, dinobuton, nitrophthalisopropyl,
- phenylpyrroles such as fenpiclonil or fludioxonil, sulfur,
- other fungicides such as acibenzolar-S-methyl, benthiavalicarb, carpropamid, chlorothalonil, cyflufenamid, cymoxanil, diclomezin, diclocymet, diethofencarb, edifen-phos, ethaboxam, fenhexamid, fentin-acetate, fenoxanil, ferimzone, fluazinam, fosetyl, fosetyl-aluminum, iprovalicarb, hexachlorobenzene, metrafenon, pencycuron, propamocarb, phthalide, toloclofos-methyl, quintozene, zoxamid,
- strobilurins such as azoxystrobin, dimoxystrobin, fluoxastrobin, kresoximmethyl, me-tominostrobin, orysastrobin, picoxystrobin or trifloxystrobin,
- sulfenic acid derivatives such as captafol, captan, dichlofluanid, folpet, tolylfluanid,
- cinnemamides and analogs such as dimethomorph, flumetover or flumorph.

In particular strobilurins are preferred as fungicides.

In a further particular embodiment of the invention the agriculturally active compound includes at least one plant growth regulating compound, also termed as PGR or plant growth regulator. In this embodiment the agriculturally active compound is preferably selected from PGR, a mixture of PGRs and mixtures of at least one PGR compound with at least one fungicide or insecticide compound.

Plant growth regulators (PGRs) are a group of organic substances that alter general and specific growth and differentiation and development processes in a plant. In particular, PGRs generally accelerate or retard the rate of growth or maturation of plants or their produce. For example, some PGRs can stimulate seed germination, alter the plant height or change the rate of plant growth, induce flowering, darken leaf coloring, or modify the timing and efficiency of fruiting. Suitable PGRs for the purpose of the present invention include:
- Antiauxins such as clofibric acid and 2,3,5-tri-iodobenzoic acid;
- Auxins, such as 2,4-dichlorophenoxy acetic acid (2,4-D), 4-(2,4-dichlorophenoxy)-butyric acid (2,4-DB), dichlorprop, fenoprop, naphthalene acetamide, naphthalene acetic acid, 1-naphthole, naphthoxy acetic acid, potassium naphthenate, sodium naphthenate, (2,4,5-trichlorophenoxy) acetic acid (2,4,5-T);
- Gibberellines, such as gibberellinic acid;
- Cytokinins, such as benzyladenine, kinetin, zeatin;
- Defoliants, such as calcium cyanamide, dimethipin, endothal, ethephon, merphos, metoxuron, pentachlorophenol, thidiazuron, tribufos;
- Ethylene inhibitors, such as aviglycine, 1-methylcyclopropene;
- Ethylene releasers, such as ACC, etacelasil, ethephon, glyoxime;
- Growth inhibitors, such as abscisic acid, ancymidol, butralin, carbaryl, chlorphonium, chlorpropham, dikegulac, flumetralin, fluoridamid, fosamine, glyphosine, isopyrimol, jasmonic acid, maleic hydrazide, mepiquat and salts thereof, piproctanyl, prohydrojasmon, propham, 2,3,5-tri-iodobenzoic acid; Morphactins, such as chlorfluren, chlorflurenol, dichlorflurenol, flurenol;
- Growth retardants and growth modifiers, such as chlormequat chloride, daminozide, flurprimidol, mefluidide, paclobutrazole, cyproconazole, tetcyclacis, uniconazole;
- Growth stimulators, such as brassinolide, forchlorfenuron, hymexazol, 2-amino-6-oxypurine derivatives, indolinone derivatives, 3,4-disubstituted maleimide derivatives and fused azepinone derivatives.

In order to improve the solubility of the agriculturally active compounds liquid aids can also be added to the supercritical CO₂. Such suitable liquid aids include, e.g., water or organic solvents selected from the group consisting of short-chain aliphatic alcohols, aliphatic ketones and alkyl esters of aliphatic carboxylic acids, where the aliphatic moieties may be branched or unbranched, having chain length from C₁ to C₁₀, preferably C₁ to C₈, in particular C₂ to C₃. Suitable alcohols include methanol, ethanol, n-propanol, isopropanol, n-butanol, ethylene glycol, propylene glycol, butylene glycol and hexylene glycol. Suitable ketones include acetone, methylethyl keton and the like. Suitable esters include methyl acetate, ethyl acetate, propyl acetate, butyl acetate, methyl propionate, ethyl propionate, methyl butyrate ethyl butyrate. Liquid aids can be used, typically, in concentrations up to 20 wt%, preferably from 1 wt% to 10 wt%, in particular from 2 wt% to 5 wt%, based on the amount of CO₂. In principle, entrainers can be used, which, e.g., set a suitable pH environment in the supercritical CO₂. Those which are suitable for this are in particular organic amines, such as triethylamine or ammonia, which may additionally improve the solubility of the agriculturally active compound.

Liquids aids and/or entrainers which are mentioned as preferred, but also all other suitable aids and/or entrainers, can also be added to the agriculturally active compound, which should preferably be done at atmospheric pressure. Other substances which can be used as aids are surface active substances, since they themselves have good solubility in supercritical CO₂. Using these surfactants not only improves the solubility of certain agriculturally active compounds, they also facilitate the penetration of the agriculturally active compound into the seed, since the diffusivity of the mass system is increased by a further reduction of the surface tension.

The present method according to the invention can be principally used for the treatment of any seed. The method has particular benefits for sensitive seeds such as seeds of fruits such as melon and seeds of vegetables such as carrots, cabbages, tomatoes, oil seed rape and lettuce and seeds of ornamentals such as petunia, marigold, and snapdragon. The method also provides benefit for grains such as wheat and corn.

### Example 1

An autoclave was charged with 10 g of cabbage seed and with the equivalent of 25 g/100 kg seed of pyraclostrobin. Under stirring the pressure was increased to 150 bar in 15 min. Subsequently the seed and the pyraclostrobin were brought into contact with supercritical CO₂ for 30 min at a temperature of 35 °C. Then the autoclave was depressurized in 20 min with a pressure reduction rate of 7,5 bar/min. The germination rate of the cabbage seed was 100% compared with the germination rate of untreated cabbage seeds.

### Comparative example 1: Impregnation of cabbage seed according to DE 4202320

An autoclave was charged with 10 g cabbage seed and the equivalent of 25 g/100 kg seed of pyraclostrobin. At a pressure in the range of 260 to 280 bar and at temperature ranging from 50 to 58 °C the seed was treated for 1 h with CO₂. Subsequently, the pressure was decreased in 5 to 8 bar steps, wherein the expansion time was 4 min per step. The germination rate was 74% compared with the germination rate of untreated cabbage seeds.

### Comparative example 2: Impregnation of tomato seeds according to WO 02/20177

An autoclave was charged with 10 g cabbage seed and the equivalent of 25 g/100 kg seed of pyraclostrobin. The autoclave was brought at 50 °C to a pressure of 100 bar and was charged with CO₂. The pressure was then increased to 300 bar over a period of 5 min and then rapidly reduced back to 100 bar in the course of 15 s. This pulsation operation was repeated in the same manner 5 times. No germination of the cabbage seeds treated this way was found.

## Claims

1. A method for impregnating seed with at least one agriculturally active compound wherein the seed is brought into contact with a solution of the agriculturally active compound in supercritical CO₂ **characterized in that** the CO₂ is transferred to its subcritical state by a pressure reduction where the pressure reduction rate is in the range from of 4 to 20 bar/min.

2. The method according to claim 1 **characterized in that** the pressure reduction is performed in a time period ranging from 10 to 60 min.

3. The method according to any of the preceding claims **characterized in that** the pressure maximum is reached in a time period ranging from 5 s to 60 min.

4. The method according to any of the preceding claims **characterized in that** the solution of the agriculturally active compound is brought into contact with the seed for a time period of 1 min to 120 min.

5. The method according to any of the preceding claims **characterized in that** the solution of the agriculturally active compound is brought into contact with the seed at a pressure maximum in a range of 80 to 300 bar.

6. The method according to any of the preceding claims **characterized in that** the solution of the agriculturally active compound is brought into contact with the seed at temperatures in a range of 30 to 70 °C

7. The method according to any of the preceding claims **characterized in that** the agriculturally active compound comprises a least one compound selected from the group of fungicides.

8. The method according to claim 7 **characterized in that** the fungicide is selected from the group of strobilurines and azoles.

9. The method according to any of the preceding claims **characterized in that** the agriculturally active compound comprises a least one compound selected from the group of insecticides.

10. The method according to claim 9 **characterized in that** the insecticide is selected from the group of neonicotinoids.

11. The method according to any of the preceding claims **characterized in that** the agriculturally active compound comprises a least one compound selected from the group of plant growth regulators.

12. The method according to any of the preceding claims **characterized in that** the seed is selected from seeds of the group of fruits, vegetables, ornamentals and grains.
